# EUROPEAN PATENT APPLICATION

(11) **EP 3 804 587 A1**
(43) Date of publication of application: **14.04.2021**
(21) Application number: 20197111.6
(22) Date of filing: 21.09.2020
(51) Int. Cl.: A47J 42/12, A47J 42/20

(54) **PAIR OF MILLSTONES FOR GRINDING COFFEE BEANS**

(30) Priority: 07.10.2019 KR 20190123705
(71) Applicant: Cha, Kee Jeong, Busan 46606 (KR); Paek, Kyung Ja, Gyeongsangnam-do 50800 (KR)
(72) Inventor: Cha, Kee Jeong, Busan 46606 (KR); Paek, Kyung Ja, Gyeongsangnam-do 50800 (KR)
(74) Representative: M. Zardi & Co S.A.

(57) **Abstract**

Disclosed herein is a pair of millstones for grinding coffee beans. The pair of millstones includes: a lower millstone configured such that a shaft hole is formed at the center thereof, a plurality of discharge grooves configured to discharge coffee beans to edges while grinding the coffee beans is formed in the top surface thereof, and an accommodation portion configured to accommodate coffee beans falling down through the discharge grooves is provided outside the discharge grooves; a shaft pin adapted to be fitted into the shaft hole of the lower millstone, and configured such that transfer paths are formed in the outer surface thereof; and an upper millstone configured such that an insertion hole is formed at the center thereof, an introduction hole configured to receive coffee beans extends upward from the insertion hole, and a grip is provided on one side thereof.

## Description

### CROSS-REFERENCE TO RELATED APPLICATION

This application claims the benefit of Korean Patent Application No. 10-2019-0123705 filed on October 7, 2019, which is hereby incorporated by reference herein in its entirety.

### BACKGROUND

### 1. Technical Field

The present invention relates generally to a pair of millstones for grinding coffee beans, and more particularly to a pair of millstones for grinding coffee beans that grinds coffee beans at low speed via a millstone structure, so that almost no noise is generated, and so that the amount of heat generated during a grinding process is small, with the result that it is possible to grind coffee beans into fine particles without damaging the taste of the coffee beans, thereby providing soft and rich coffee taste, and that is small in size, so that it is convenient to handle the pair of millstones.

### 2. Description of the Related Art

Coffee mills are used to grind roasted coffee beans into sizes suitable for coffee extraction methods and equipment. The degree of grinding of coffee particles is an important factor in coffee flavor and the extraction yield of water-soluble solids because it determines the extraction rate and the surface area in contact with water during coffee extraction. As the size of ground coffee particles decreases, the surface area thereof becomes larger, so that the extraction yield of coffee components becomes larger and the extraction time becomes longer. Accordingly, coffee beans should be pulverized into fine particles for an extraction device having a short contact time between coffee and water, and the size of ground coffee particles is preferably increased for an extraction device having a long contact time with water.

Generally, it is not easy to extract coffee for a long period of time in order to drink coffee. Accordingly, grinding coffee beans into fine particles has a positive effect on the taste and aroma of coffee.

Meanwhile, Korean Patent Application Publication No. 10-2013-0003599 (published on January 9, 2013) discloses a coffee bean grinder. Referring to this publication, when coffee beans are fed, a grinding blade is rotated to grind the beans, thereby providing the advantage of making it possible to rapidly grind the beans. However, when the beans are ground using the grinding blade, heat is generated due to the characteristics of the metal material and has a negative effect on the aroma of the coffee beans. Furthermore, another problem arises in that a considerable amount of noise is generated during a grinding process.

### SUMMARY

The present invention has been conceived to overcome the above-described problems, and an object of the present invention is to provide a pair of millstones for grinding coffee beans that grinds coffee beans at low speed via a millstone structure, so that almost no noise is generated, and so that the amount of heat generated during a grinding process is small, with the result that it is possible to grind coffee beans into fine particles without damaging the taste of the coffee beans, thereby providing soft and rich coffee taste, and that is small in size, so that it is convenient to handle the pair of millstones.

In order to accomplish the above object, the present invention provides a pair of millstones for grinding coffee beans, the pair of millstones including: a lower millstone configured such that a shaft hole is formed at the center thereof, a plurality of discharge grooves configured to discharge coffee beans to edges while grinding the coffee beans is formed in the top surface thereof, and an accommodation portion configured to accommodate coffee beans falling down through the discharge grooves is provided outside the discharge grooves; a shaft pin adapted to be fitted into the shaft hole of the lower millstone, and configured such that transfer paths configured to transfer coffee beans are formed in the outer surface thereof in a vertical direction; and an upper millstone configured such that an insertion hole is formed at the center thereof so that the upper millstone is fitted around the shaft pin over the lower millstone, an introduction hole configured to receive coffee beans extends upward from the insertion hole, and a grip is provided on one side thereof.

The discharge grooves formed in the lower millstone may be formed such that the depth thereof gradually decreases from the center thereof toward the edges thereof, thereby pulverizing coffee beans into fine particles.

The transfer paths formed in the shaft pin may be formed such that the width and depth thereof gradually decrease in a downward direction, thereby allowing introduced coffee beans to be crushed while being transferred downward.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is an exploded perspective view showing a pair of millstones for grinding coffee beans according to one embodiment of the present invention;
FIG. 2(A) is a plan view showing a lower millstone according to one embodiment of the present invention, and FIG. 2(B) is a sectional view taken along line A-A of FIG. 2(A);
FIG. 3(A) is a front view showing a shaft pin according to one embodiment of the present invention, FIG. 3(B) is a longitudinal sectional view of FIG. 3(A), and FIG. 3(C) is a plan view of FIG. 3(A);
FIG. 4 is a longitudinal sectional view showing an upper millstone according to one embodiment of the present invention;
FIG. 5 is a longitudinal sectional view showing the coupling of a pair of millstones for grinding coffee beans according to one embodiment of the present invention; and
FIG. 6(A) is a perspective view showing a state in which a pair of millstones for grinding coffee beans according to one embodiment of the present invention is used, and FIG. 6(B) is a longitudinal sectional view of FIG. 6(A).

### DETAILED DESCRIPTION

A pair of millstones for grinding coffee beans according to the present invention will be described in greater detail with reference to the accompanying drawings.

Prior to the following description, the terms and words used in the present specification and the attached claims should not be construed as having typical or dictionary meanings, but should be interpreted as having meanings and concepts consistent with the technical spirit of the present invention based on the principle that an inventor may appropriately define the concept of words in order to describe his or her invention in the best way.

Therefore, it should be noted that the configurations described in the embodiments in this specification and shown in the accompanying drawings are merely some embodiments of the present invention but do not cover the overall technical spirit of the present invention, so that various equivalents and modifications capable of replacing the configurations may be present at the time when the present application is filed.

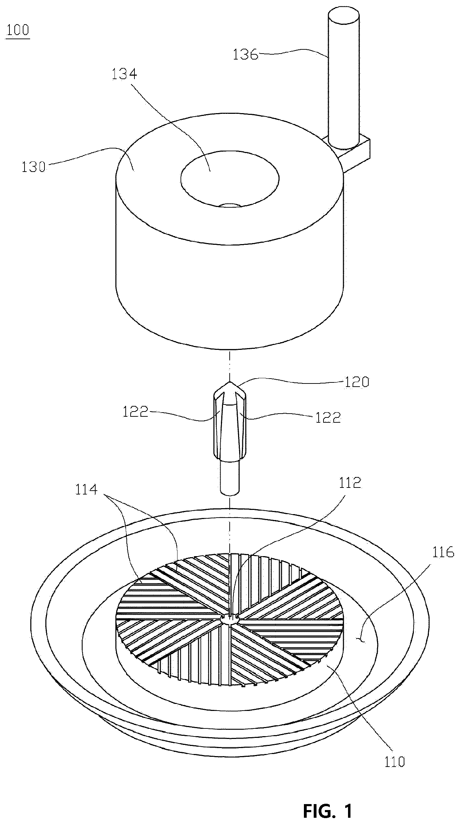

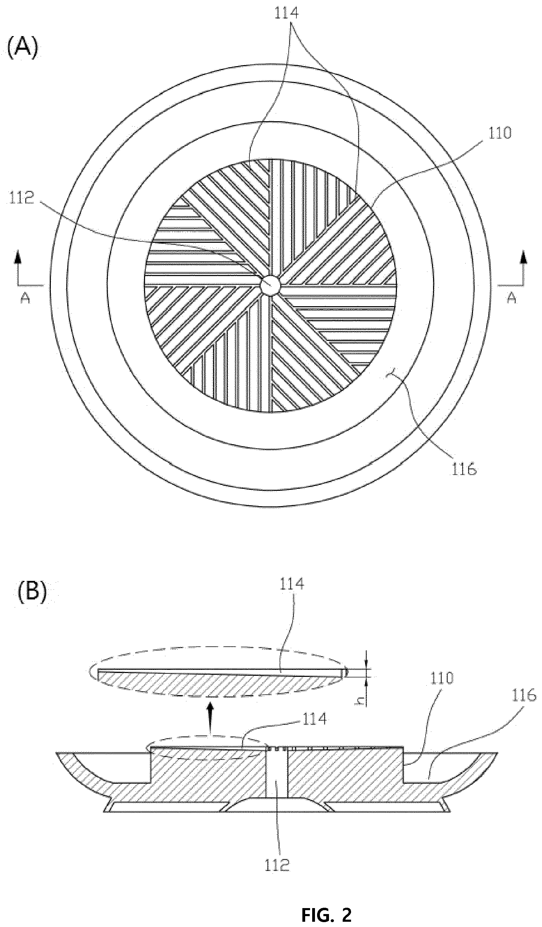

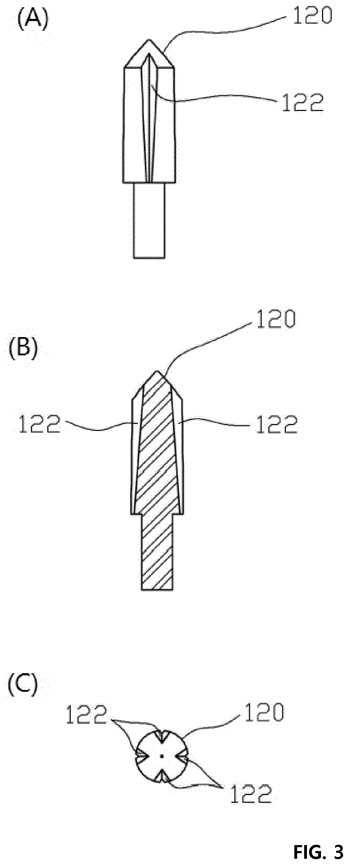

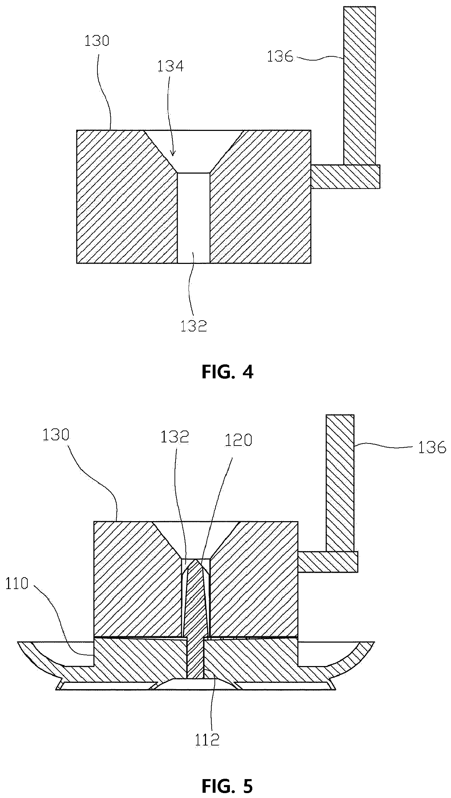

FIG. 1 is an exploded perspective view showing a pair of millstones for grinding coffee beans according to one embodiment of the present invention; FIG. 2(A) is a plan view showing a lower millstone according to one embodiment of the present invention, and FIG. 2(B) is a sectional view taken along line A-A of FIG. 2(A); FIG. 3(A) is a front view showing a shaft pin according to one embodiment of the present invention, FIG. 3(B) is a longitudinal sectional view of FIG. 3(A), and FIG. 3(C) is a plan view of FIG. 3 (A); FIG. 4 is a longitudinal sectional view showing an upper millstone according to one embodiment of the present invention; and FIG. 5 is a longitudinal sectional view showing the coupling of a pair of millstones for grinding coffee beans according to one embodiment of the present invention.

Referring to FIG. 1, a pair of millstones 100 for grinding coffee beans according to the present invention basically includes a lower millstone 110, a shaft pin 120, and an upper millstone 130.

First, a shaft hole 112 is formed at the center of the lower millstone 110, and a plurality of discharge grooves 114 configured to discharge coffee beans to the edges thereof while grinding coffee beans is formed in the top surface of the lower millstone 110. In particular, as shown in FIG. 2(A), the discharge grooves 114 are preferably divided into eight equal parts. The discharge grooves 114 formed in each of the parts are formed in a diagonal direction. It is obvious that these directions vary depending on the direction in which the upper millstone 130 is rotated. It should be noted that the directions of the discharge grooves 114 are shown in the drawings based on an example in which the upper millstone 130 is rotated in a counterclockwise direction. Meanwhile, as shown in FIG. 2(B), it can be seen that the discharge grooves 114 are formed such that the depth h thereof gradually decreases from the center thereof toward the edges thereof. Furthermore, it is also preferable that the discharge grooves 114 are formed such that the width thereof gradually decreases toward the edges thereof. Moreover, an accommodation portion 116 configured to accommodate coffee beans falling down through the discharge grooves 114 is provided outside the discharge grooves 114.

Next, the shaft pin 120 is formed in multiple stages so that the lower part thereof is inserted into the shaft hole 112 of the lower millstone 110, and transfer paths 122 are formed on the outer surface thereof in a vertical direction. In this case, the transfer paths 122 are formed on the outer surface of the shaft pin 120 to be plural in number so that the width of each of the transfer paths 122 gradually decreases in a downward direction and the depth thereof also decreases gradually in the downward direction, as shown in FIGS. 3(A) to 3(C). The reason for this is to allow coffee beans, introduced from a location above the shaft pin 120, to be pulverized while moving downward.

Finally, an insertion hole 132 is formed at the center of the upper millstone 130 so that the upper millstone 130 is fitted around the shaft pin 120 over the lower millstone 110, an introduction hole 134 configured to receive coffee beans extends upward from the insertion hole 132, and a grip 136 is provided on one side of the upper millstone 130. In this case, the introduction hole 134 is preferably formed in a shape that gradually widens upward in order to facilitate the introduction of coffee beans.

The pair of millstones 100 for grinding coffee beans according to the present invention, which is configured as described above, is coupled, as shown in FIG. 5. In other words, it can be seen that the shaft pin 120 is fitted into the shaft hole 112 of the lower millstone 110 and the upper millstone 130 is coupled and located via a shaft on the lower millstone 110.

Now, in the following description, the operation of the pair of millstones 100 for grinding coffee beans according to the present invention, which is configured as described above, will be described based on the state in which of the pair of millstones 100 for grinding coffee beans is used.

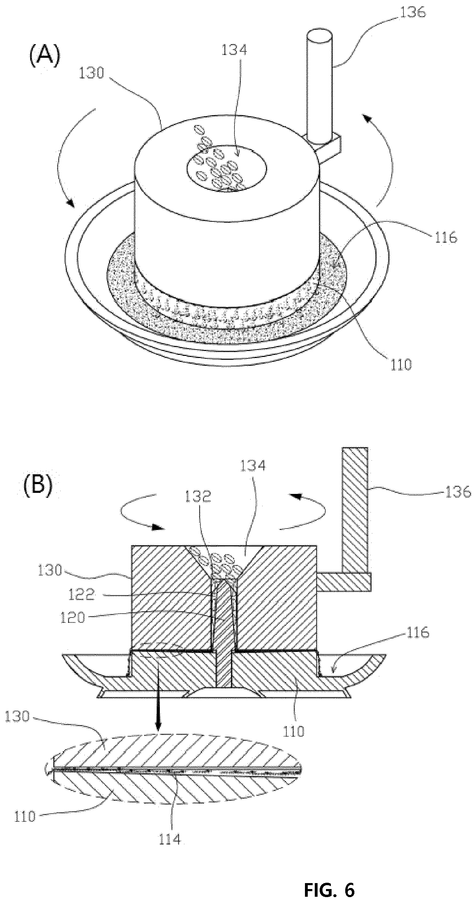

FIG. 6(A) is a perspective view showing a state in which a pair of millstones for grinding coffee beans according to one embodiment of the present invention is used, and FIG. 6(B) is a longitudinal sectional view of FIG. 6(A).

First, referring to FIG. 6(A), while introducing roasted coffee beans into the introduction hole 134 formed in the upper millstone 130, a user holds the grip 136 provided on one side of the upper millstone 130 and rotates the grip 136 in a counterclockwise direction, which is the direction of the arrows. Then, the introduced coffee beans are pulverized, discharged between the upper/lower millstones 110 and 130, and stored in the accommodation portion 116 provided on the outer surface of the lower millstone 110.

In other words, as shown in FIG. 6(B), when the upper millstone 130 is rotated, the coffee beans introduced into the introduction hole 134 pass through the transfer paths 122 formed on the outer surface of the shaft pin 120. Since the width of the transfer paths 122 is formed to decrease in a downward direction, the coffee beans are crushed into a predetermined size while passing through the transfer paths 122. Thereafter, the coffee beans crushed into the predetermined size are transferred to the top surface of the lower millstone 110. When the upper millstone 130 continues to be rotated, the coffee beans are pulverized, enter the discharge grooves 114 formed in the top surface of the lower millstone 110, are pulverized in the form of fine particles while being gradually pushed toward the edges, and are discharged to the outside. Meanwhile, the depth of the discharge grooves 114 gradually decreases toward the edges. Accordingly, as the discharge grooves 114 approach the edges, they become closer to the bottom surface of the upper millstone 130. It is natural that the coffee beans are pulverized in a finer manner in the portions of the discharge grooves 114 closer to the bottom surface of the upper millstone 130.

In summary, in the overall grinding process, after coffee beans have been introduced, the coffee beans are crushed into a predetermined size while passing through the transfer paths 122 of the shaft pin 120, are gradually pulverized into fine particles while being transferred from the centers of the upper/lower millstones 110 and 130 to the edges thereof, and are finally discharged. In other words, coffee beans are not pulverized finely at once, but are pulverized in stages. As a result, the effect of requiring a small amount of force may be implemented because pulverization can be performed even when the upper millstone is rotated at low speed. Furthermore, the effect of preventing the taste of coffee beans from being damaged may be implemented because pulverization noise is prevented from being generated and a small amount of heat is generated in a pulverization process.

Furthermore, it is obvious that an unexpected effect is achieved in that interest and fun are increased because coffee beans can be directly pulverized by a millstone method and then provided.

Moreover, effects are achieved in that space utilization is excellent and it is convenient to handle the pair of millstones because the overall size of the pair of millstones can be reduced via the structural change in which the introduction hole 134 configured to receive coffee beans is formed at the center of the upper millstone 130 and the structural change in which the transfer paths 122 are formed in the shaft pin 120 so that coffee beans are supplied while being crushed.

According to the present invention, coffee beans are ground at low speed via a millstone structure, so that almost no noise is generated, grinding is performed in stages, so that the amount of heat generated during a grinding process is small, with the result that it is possible to grind coffee beans into fine particles without damaging the taste of the coffee beans, thereby achieving the effect of providing soft and rich coffee taste.

Furthermore, the overall size of the pair of millstones may be reduced via the structural change in which the introduction hole configured to receive coffee beans is formed at the center of the upper millstone and the structural change in which the transfer paths are formed in the shaft pin so that coffee beans are supplied while being crushed. Accordingly, space utilization is excellent and it is convenient to handle the pair of millstones.

The foregoing has somewhat broadly outlined the features and technical advantages of the present invention so that the claims of the invention to be described later can be better understood. Additional features and advantages constituting the claims of the present invention will be described below. It should be recognized by those skilled in the art that the disclosed concepts and specific embodiments of the present invention may be immediately used as a basis for designing or modifying other structures for carrying out purposes similar to that of the present invention.

Furthermore, the concepts and embodiments of the invention disclosed in the present application may be used as a basis for designing other structures in order to perform the same object as the present invention and may be modified or changed in various ways by those having ordinary skill in the art to which the present invention pertains without departing from the spirit or scope of the present invention.

## Claims

1. A pair of millstones for grinding coffee beans, the pair of millstones comprising:
a lower millstone configured such that a shaft hole is formed at a center thereof, a plurality of discharge grooves configured to discharge coffee beans to edges while grinding the coffee beans is formed in a top surface thereof, and an accommodation portion configured to accommodate coffee beans falling down through the discharge grooves is provided outside the discharge grooves;
a shaft pin adapted to be fitted into the shaft hole of the lower millstone, and configured such that transfer paths configured to transfer coffee beans are formed in an outer surface thereof in a vertical direction; and
an upper millstone configured such that an insertion hole is formed at a center thereof so that the upper millstone is fitted around the shaft pin over the lower millstone, an introduction hole configured to receive coffee beans extends upward from the insertion hole, and a grip is provided on one side thereof.

2. The pair of millstones of claim 1, wherein the discharge grooves formed in the lower millstone are formed such that a depth thereof gradually decreases from a center thereof toward edges thereof, thereby pulverizing coffee beans into fine particles.

3. The pair of millstones of claim 1, wherein the transfer paths formed in the shaft pin are formed such that a width and depth thereof gradually decrease in a downward direction, thereby allowing introduced coffee beans to be crushed while being transferred downward.
